# FASCICULE DE BREVET EUROPEEN

(11) **EP 2 495 476 B1**
(45) Date de publication et mention de la délivrance du brevet: **20.04.2016**
(21) Numéro de dépôt: 12157230.9
(22) Date de dépôt: 28.02.2012
(51) Int. Cl.: F16H 61/456, B60K 17/356, F16H 61/4017, F16H 61/4043

(54) **Dispositif de transmission hydrostatique d'un engin mobile, équipé d'une valve de contrôle de la pression et d'un sélecteur.**
Hydrostatische Übertragungsvorrichtung einer beweglichen Maschine, die mit einem Druckkontrollventil und einem Wahlschalter ausgestattet ist
Hydrostatic transmission device of a mobile unit, provided with a pressure-control valve and a selector

(30) Priorité: 01.03.2011 FR 1151635
(43) Date de publication de la demande: 05.09.2012
(73) Titulaire: Fluid-System (Sarl), 42420 Lorette (FR)
(72) Inventeur: Payre, Christophe, 84460 CHEVAL BLANC (FR); Lagors, Frédéric, 38200 SERPAIZE (FR)
(74) Mandataire: Roman, Alexis

(56) Documents cités:
- FR-A5- 2 193 454
- US-A1- 2010 043 422

## Description

### Domaine technique de l'invention.

L'invention a pour objet un dispositif de transmission hydrostatique d'un engin mobile, ledit dispositif étant équipé d'une valve de contrôle de la pression et d'un sélecteur. L'invention a également pour objet un procédé pour contrôler une pression hydrostatique dans un engin mobile.

Elle concerne en particulier le domaine technique des dispositifs de transmission hydrostatique sur les engins mobiles, permettant de contrôler la répartition des couples dans les roues avant et arrière desdits engins.

### État de la technique.

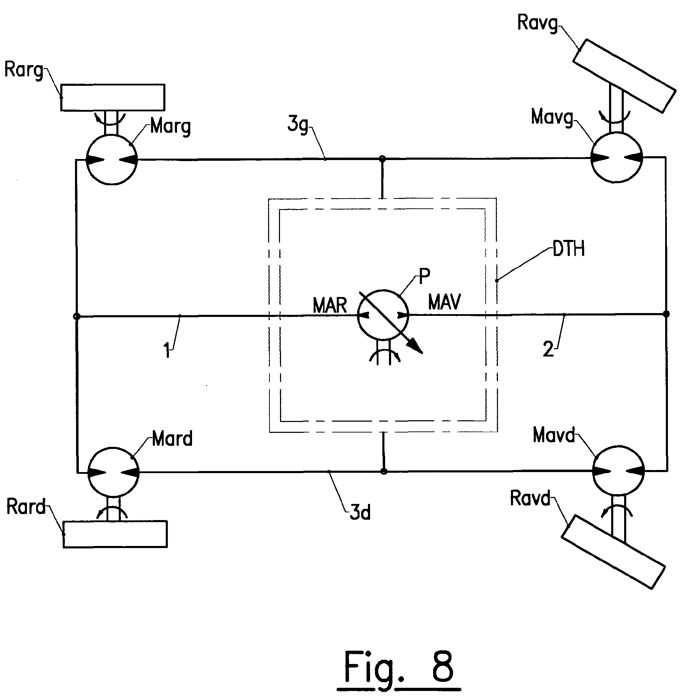

En se rapportant à la figure 8 annexée, les dispositifs de transmission hydrostatique DTH d'un engin mobile comprennent généralement :
- au moins une roue avant gauche Ravg et une roue avant droite Ravd, et au moins une roue arrière gauche Rarg et une roue arrière droite Rard ;
- une pompe P dont les orifices principaux sont reliés à une conduite haute pression 1 « marche arrière MAR », et une conduite haute pression 2 « marche avant MAV» ;
- au moins un premier Marg et un second Mard moteurs « arrière » reliés à la conduite haute pression 1 « marche arrière MAR» et au moins un premier Mavg et un second Mavd moteurs « avant » reliés à la conduite haute pression 2 « marche avant MAV», chaque dit moteur « arrière » étant relié à un dit moteur « avant » par une conduite de série 3g, 3d, constituant ainsi un circuit fermé de transmission. Les moteurs « arrière » Marg, Mard, entrainent les roues arrière Rarg, Rard, et les moteurs « avant » Mavg, Mavd, entrainent les roues avant Ravg, Ravd.

Lors d'un virage, les roues avant Ravg, Ravd tournent avec un grand angle. Dans la configuration de la figure 8 (virage à droite), les roues arrière Rard, Rarg tournent moins vite que les roues avant Ravg, Ravd et la pression dans les conduites série 3d, 3g augmente. Cela est du au fait que le débit transmis par les roues avant Ravg, Ravd est plus élevé que le débit avalé par les roues arrières Rard, Rarg. Cette augmentation de la pression risque d'endommager le circuit et/ou de faire riper les roues qui s'opposent à la giration de l'engin. On observe également de brusques montées en pression dans la conduite de série lorsque le véhicule circule dans de fortes montées ou descentes.

Pour éviter de telles montées en pression, parfois violentes, il est courant d'utiliser une valve de contrôle de la pression connectée aux conduites de série.

Une première solution connue consiste à utiliser une valve de contrôle du débit dont l'ouverture est liée à l'angle de braquage des roues avant. Cette valve, associée à une came, évacue l'excédent de débit qui peut apparaître lorsque les roues, entraînées par les moteurs hydrauliques liés par une conduite série, ne parcourent pas la même distance, ce qui est le cas en virage. Toutefois, cette solution n'élimine pas les risques de brusque montée en pression lorsque le véhicule circule dans des fortes pentes. En outre, cette valve est réglée pour une vitesse estimée de l'engin en virage. Elle ne couvre donc pas les habitudes de conduites de différents conducteurs.

Une autre solution, décrite dans le document brevet FR 2.828.544 (POCLAIN), consiste à utiliser un limiteur de pression réglé à la valeur maximale admissible par le circuit. Toutefois, du fait de la pression de tarage élevée du limiteur, la pression peut être élevée dans les conduites de série, et des variations brutales de la pression restent possibles. En outre, lors de fortes montées, les roues avant ont tendance à patiner du fait qu'elles sont moins chargées que les roues arrière.

Le document brevet FR 2.913.218 (POCLAIN), qui divulgue les caractéristiques du préambule de la revendication 1, enseigne d'utiliser au moins une valve de contrôle de la pression apte à relier la conduite série au circuit basse pression. Cette valve est commandée en fonction de la haute pression de la pompe. En rendant la pression maximale admise dans la conduite de série, à une pression limite dépendante de la haute pression de la pompe, on limite le couple transféré aux roues entraînées par les moteurs alimentés en série, à une valeur mécaniquement acceptable. De plus, la pression dans la conduite de série est ajustée en fonction de la haute pression de la pompe, c'est-à-dire en fonction du couple moteur nécessaire à l'instant considéré pour le véhicule, de manière à ne pas priver inutilement de couple moteur les moteurs liés à la conduite de série, et cela tout en évitant les montées en pression excessives qui risquent d'entraîner une perte d'adhérence des roues. Bien qu'efficace, le branchement de la valve de contrôle de pression sur le circuit basse pression engendre un certain nombre d'inconvénients et notamment :
- l'architecture du circuit hydraulique est complexe du fait qu'il faut prévoir des clapets de réalimentation pour réinjecter dans les branches série le fluide manquant, par exemple lorsque les roues avant et arrière ont un différentiel de débit négatif,
- il est nécessaire de prévoir une gestion électrique pour gérer les descentes et les montées,
- le nombre d'orifices reste important,
- etc.

Face à cet état des choses, l'objectif que vise à atteindre l'invention, est de fournir un dispositif de transmission hydrostatique du type décrit dans le document brevet FR 2.913.218 (POCLAIN), mais dans lequel l'architecture du circuit hydraulique est simplifiée.

Un autre objectif de l'invention est de proposer un dispositif de transmission hydrostatique éliminant tout ou partie des inconvénients précités.

### Divulgation de l'invention.

La solution proposée par l'invention est un dispositif de transmission hydrostatique d'un engin mobile comprenant :
- une pompe dont les orifices principaux sont reliés à une conduite haute pression « marche arrière », et une conduite haute pression « marche avant »,
- un premier et un second moteurs « arrière » aptes à être reliés à la conduite haute pression « marche arrière », et un premier et un second moteurs « avant » aptes à être reliés à la conduite haute pression « marche arrière » ou à la conduite haute pression « marche avant », chaque dit moteur « arrière » étant relié à un dit moteur « avant » par une conduite de série, constituant ainsi un circuit fermé de transmission,
- au moins une valve de contrôle de la pression connectée aux conduites de série.

Ce dispositif est remarquable en ce que la valve de contrôle de la pression est reliée à un sélecteur commandé en fonction de la différence de pression entre la conduite haute pression « marche avant » et la conduite haute pression « marche arrière », pour relier sélectivement les conduites de série à la conduite haute pression « marche arrière » ou à la conduite haute pression « marche avant ». La valve de contrôle de la pression n'est donc plus reliée au circuit basse pression comme cela est décrit dans le document brevet FR 2.913.218 (POCLAIN).

Entre autres avantages, le fait de relier la valve de contrôle de la pression à la conduite haute pression « marche arrière », permet de simplifier l'architecture du dispositif de transmission par rapport à celui décrit dans le document brevet FR 2.913.218 (POCLAIN). En effet, il n'est maintenant plus utile de prévoir des dispositifs de réalimentation. En outre, les conduites de série peuvent maintenant se décharger ou se réalimenter par une conduite haute pression.

Le document US 2010/0043422 (LOEWE) divulgue un dispositif de transmission hydrostatique d'un engin mobile dans lequel une vanne de commutation permet de relier les conduites de série aux conduites « marche avant » et « marche arrière », par l'intermédiaire d'une ligne de by-pass. Cette dernière est pourvue de clapets anti-retour. La différence de pression entre la ligne de by-pass et la conduite « marche avant » ou la conduite « marche arrière » qui commande l'ouverture ou la fermeture des clapets anti-retour.

Le document FR 2.193.454 (BORG-WARNER) divulgue un circuit hydraulique mobile dans lequel un distributeur d'égalisation permet de relier les conduites de série aux conduites « marche avant » et « marche arrière ». Un circuit logique, comprenant deux clapets de retenue montés en parallèle, est disposé en aval du distributeur. Ce circuit logique comprend une entrée reliée à une sortie du distributeur, une première sortie reliée à la conduite « marche avant » et une seconde sortie reliée à la conduite « marche arrière ». Lorsque le fluide sort du distributeur, il peut circuler soit vers l'une des conduites « marche avant » ou « marche arrière », soit vers une cuve. C'est la différence de pression entre la sortie du distributeur et la conduite « marche avant » ou la conduite « marche arrière », qui commande l'ouverture ou la fermeture des clapets de retenue.

D'autres caractéristiques remarquables du dispositif objet de l'invention sont listées ci-dessous, chacune de ces caractéristiques pouvant être considérée seule ou en combinaison, indépendamment des possibilités de connexion des conduites de série :
- le sélecteur est configuré pour autoriser le déchargement des conduites de série dans la conduite haute pression « marche arrière », lorsque ladite conduite haute pression n'est pas sous pression ;
- le sélecteur est configuré pour autoriser le déchargement des conduites de série dans la conduite haute pression « marche avant », lorsque ladite conduite haute pression n'est pas sous pression ;
- le sélecteur est commandé en fonction de la différence de pression régnant dans la conduite haute pression « marche arrière » et dans la conduite haute pression « marche avant » ;
- le sélecteur comporte une première position permettant de relier les conduites de série à la conduite haute pression « marche arrière » et une seconde position permettant de relier lesdites conduites de série à la conduite haute pression « marche avant » ;
- le sélecteur est configuré pour se placer dans la première position lorsque la pression régnant dans la conduite haute pression « marche arrière » est inférieure à la pression régnant dans la conduite haute pression « marche avant » ;
- le sélecteur est configuré pour se placer dans la seconde position lorsque la pression régnant dans la conduite haute pression « marche arrière » est supérieure à la pression régnant dans la conduite haute pression « marche avant » ;
- chaque conduite de série est connectée à sa propre valve de contrôle de la pression, chaque dite valve étant connectée à son propre sélecteur ;
- chaque valve de contrôle de la pression est commandée en fonction de la pression dans la conduite de série à laquelle elle est connectée ;
- chaque valve de contrôle de la pression est reliée à un organe permettant de la commander en fonction de la pression dans la conduite haute pression « marche arrière » ou « marche avant », qui a la pression la plus élevée ;
- les deux conduites de série sont connectées à une unique valve de contrôle de la pression ;
- l'unique valve de contrôle de la pression est reliée à un organe permettant de la commander en fonction de la pression dans la conduite de série qui a la pression la plus élevée ;
- l'unique valve de contrôle de la pression est reliée à un organe permettant de la commander en fonction de la pression dans la conduite haute pression « marche arrière » ou « marche avant », qui a la pression la plus élevée.

Un autre aspect de l'invention concerne un procédé pour contrôler une pression hydrostatique dans un engin mobile, ledit procédé consistant à :
- mettre un fluide sous pression dans une conduite haute pression « marche arrière », et une conduite haute pression « marche avant »,
- faire circuler le fluide vers un premier et un second moteurs « arrière » aptes à être reliés à la conduite haute pression « marche arrière », et vers un premier et un second moteurs « avant » aptes à être reliés à la conduite haute pression « marche avant » ou à la conduite haute pression « marche arrière », chaque dit moteur « arrière » étant apte à être relié à un dit moteur « avant » par une conduite de série, de façon à ce que ledit fluide circule dans un circuit fermé de transmission,
- contrôler la pression dans les conduites de série en permettant auxdites conduites de se connecter sélectivement : soit à la conduite haute pression « marche arrière », soit à la conduite haute pression « marche avant », en fonction de la différence de pression entre ladite conduite haute pression « marche avant » et ladite conduite haute pression « marche arrière ».

D'autres caractéristiques remarquables du procédé objet de l'invention sont listées ci-dessous, chacune de ces caractéristiques pouvant être considérée seule ou en combinaison, indépendamment des caractéristiques définies ci-dessus :
- les conduites de série se déchargent dans la conduite haute pression « marche arrière » lorsque ladite conduite haute pression n'est pas sous pression ;
- les conduites de série se déchargent dans la conduite haute pression « marche avant » lorsque ladite conduite haute pression n'est pas sous pression.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue schématique d'un dispositif de transmission hydrostatique conforme à l'invention, dans le cas où le véhicule circule en « marche avant », sur du plat ou en montée,
- la figure 2 schématise le dispositif de transmission hydrostatique de la figure 1, dans le cas où le véhicule circule en « marche avant », en descente,
- la figure 3 est une vue schématique d'un dispositif de transmission hydrostatique conforme à l'invention, dans le cas où le véhicule circule en « marche arrière », sur du plat ou en montée,
- la figure 4 schématise le dispositif de transmission hydrostatique de la figure 1, dans le cas où le véhicule circule en « marche arrière », en descente,
- la figure 5 est une vue schématique d'un dispositif de transmission hydrostatique dans une variante de réalisation, dans le cas où le véhicule circule en « marche avant », sur du plat ou en montée,
- la figure 6 schématise le dispositif de transmission hydrostatique de la figure 5, dans le cas où le véhicule circule en « marche avant », en descente,
- la figure 7 schématise un dispositif de transmission hydrostatique selon une autre variante de réalisation,
- la figure 8 précitée illustre l'implantation d'un dispositif de transmission hydrostatique dans un véhicule.

### Modes de réalisation de l'invention.

Le dispositif de transmission hydrostatique objet de l'invention est particulièrement destiné à être utilisé dans un engin mobile du type engin de chantier ou tracteur. Il convient particulièrement à des véhicules agricoles à quatre roues motrices et cylindrée fixe ou variable, du type utilisé pour la culture de la vigne et où les terrains cultivés sont susceptibles d'être accidentés (fortes pentes, terrains glissants, ....).

Lorsque des éléments du dispositif de transmission hydrostatique DTH sont « connectés » ou « reliés » entre eux, on entend, au sens de la présente invention, que des conduit(e)s permettent de faire circuler le fluide d'un élément à l'autre.

Comme décrit précédemment en référence à la figure 8, le dispositif de transmission hydrostatique DTH comprend au moins une roue avant gauche Ravg et une roue avant droite Ravd (et de manière plus générale, un groupe d'organes de déplacement avant), et au moins une roue arrière gauche Rarg et une roue arrière droite Rard (et de manière plus générale, un groupe d'organes de déplacement arrière). Au moins un moteur « avant » et un moteur « arrière » contribuent respectivement à l'entraînement des roues avant Ravg, Ravd et des roues arrière Rarg, Rard.

Sur les figures annexées, les moteurs « avant » droit Mavd et « avant » gauche Mavg, sont des moteurs simples, c'est-à-dire constitués d'un seul moteur élémentaire. Les moteurs « arrière » sont également des moteurs simples. L'invention ne se limite toutefois pas à cette configuration, les moteurs « avant » Mavd, Mavg et « arrière » Marg, Mard pouvant être des moteurs double (ou triple, ...), c'est-à-dire constitués chacun de plusieurs moteurs élémentaires ayant chacun des orifices d'alimentation et/ou d'échappement distincts, chaque moteur élémentaire pouvant être associé à son propre organe de déplacement.

Le dispositif DTH comporte également une pompe hydraulique P, dont les orifices principaux sont reliés à une conduite haute pression 1 « marche arrière MAR », et une conduite haute pression 2 « marche avant MAV». Par conduite haute pression, on entend une conduite dans laquelle est destiné à circuler un fluide sous haute pression (par exemple environ 500 bar), que le fluide circule ou non dans ladite conduite.

Les moteurs « arrière » Mard, Marg, sont alimentés par la pompe P au moyen de la conduite haute pression 1 « marche arrière MAR ». Et les moteurs « avant » Mavd, Mavg sont alimentés par la pompe P au moyen de la conduite haute pression 2 « marche avant MAV ».

Au moins un premier moteur « arrière » Marg et un second moteur « arrière » Mard sont reliés à la conduite haute pression 1 « marche arrière ». Ces deux moteurs « arrière » sont connectés en parallèle sur la conduite haute pression 1 « marche arrière ». Au moins un premier moteur « avant » Mavg et un second moteur « avant » Mavd sont reliés à la conduite haute pression 2 « marche avant ». Ces deux moteurs « avant » sont connectés en parallèle sur la conduite haute pression 2 « marche avant ».

Chaque moteur « arrière » est relié à un moteur « avant » par une conduite de série 3g, 3d, constituant ainsi un circuit fermé de transmission. Les moteurs « arrière » Marg, Mard ont donc chacun un orifice relié à la conduite haute pression 1 « marche arrière » et un autre orifice relié à une des conduites de série 3g, 3d. Et les moteurs « avant » Mavg, Mavd ont chacun un orifice relié à une des conduites de série 3g, 3d et un autre orifice relié à la conduite haute pression 2 « marche avant ». Sur les figures annexées, le moteur « arrière » gauche Marg est relié au moteur « avant » gauche Mavg, au moyen de la conduite série gauche 3g. Et le moteur « arrière » droit Mard est relié au moteur « avant » droit Mavd, au moyen de la conduite série droite 3d. L'invention n'est toutefois pas limitée à un engin mobile présentant deux moteurs « arrière » et deux moteurs « avant », un nombre inférieur ou supérieur de moteurs, « arrière » ou « avant », pouvant également faire partie du dispositif DTH. Et en particulier lorsque l'engin est équipé de moteurs « avant » liés à des moteurs « arrière » par une conduite de série.

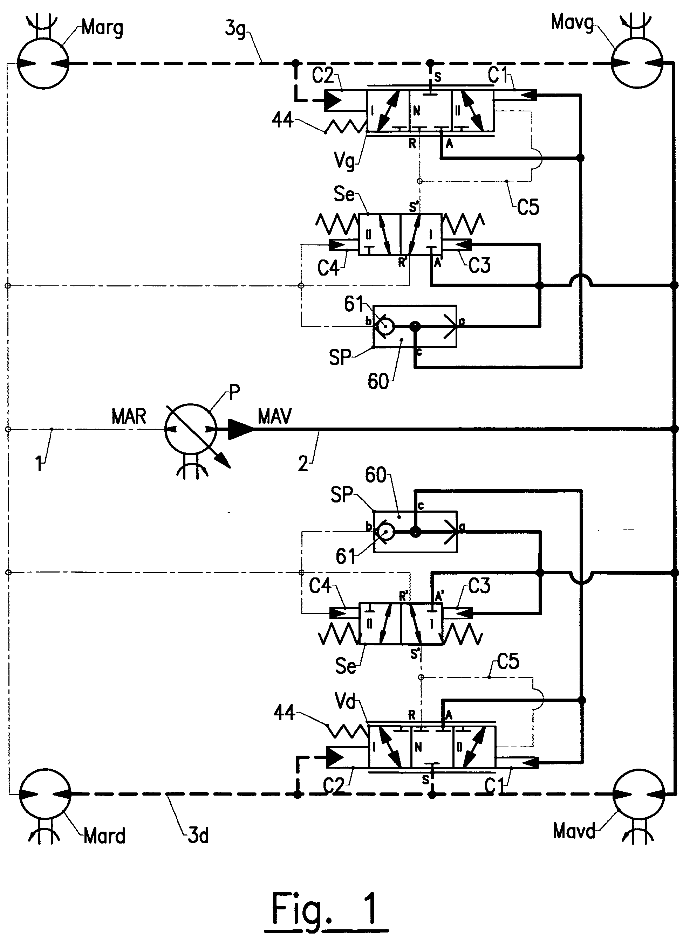

Un mode préféré de réalisation de l'invention va maintenant être décrit en référence aux figures 1 à 4. Dans ce mode de réalisation, chaque conduite de série 3g et 3d, est connectée à une valve de contrôle de la pression, respectivement Vg et Vd. Chaque valve de contrôle de la pression Vg, Vd comporte : une première voie S reliée à la conduite série 3g, 3d à laquelle elle est connectée, une deuxième voie R reliée à un sélecteur Se, une troisième voie A reliée à un sélecteur de pression SP. Ce dernier permet de sélectionner la conduite haute pression « marche arrière » 1 ou « marche avant » 2, qui a la pression la plus élevée.

Chaque valve de contrôle Vg, Vd comporte une première position I dans laquelle elle relie la première et la deuxième voie (S-R), une seconde position II dans laquelle elle relie la première et la troisième voie (S-A) et une position neutre N dans laquelle elle isole les différentes voies. Au repos, ou à l'équilibre, un ressort de rappel 44 permet de maintenir les valves Vg, Vd dans la première position I, c'est-à-dire dans une position où les conduites de séries 3g, 3d, sont susceptibles de communiquer avec le sélecteur Se.

Un organe mobile, du type tiroir, permet de passer d'une position à l'autre. Cet organe mobile est commandé par des organes de commande C1, C2. D'une manière bien connue de l'homme du métier, ces derniers se présentent avantageusement sous la forme de chambre hydraulique de commande, permettant de contrôler les valves de contrôle Vg, Vd. Un premier organe de commande C1 est relié au sélecteur de pression SP et plus particulièrement à la troisième voie « c » dudit sélecteur. Le second organe de commande C2 est relié à la conduite série 3g, 3d à laquelle chaque valve de contrôle Vg, Vd est connectée. Chaque valve de contrôle Vg, Vd est donc commandée en fonction de la différence de la pression régnant dans la conduite série 3g, 3d à laquelle ladite valve est connectée et celle régnant dans la conduite haute pression 2 « marche avant » ou dans la conduite haute pression 1 « marche arrière » (via le sélecteur de pression SP). Les sections des chambres des organes de commande C1, C2 peuvent être égales ou différentes. Sur les figures annexées, la section de la chambre de l'organe de commande C2 est supérieure à celle l'organe de commande C1. Le rapport des sections, appelé fraction de commande de la valve de contrôle, définit la fonction de limitation de pression réalisée par ladite valve. L'homme du métier pourra se rapporter au document brevet FR 2.913.218 (POCLAIN) pour la réalisation des valves de contrôle Vg, Vd et la détermination de la fraction de commande. Cette dernière est typiquement de l'ordre de 70% à 90%. Dans la suite de la description, il sera fait référence à une fraction de commande de 80%. Un drain C5 pourra être prévu pour combler cette différence de section des organes de commande C1, C2. Le drain C5 est avantageusement relié à la conduite haute pression 1 « marche arrière » ou 2 « marche avant », qui n'est pas sous pression.

Un sélecteur Se est disposé en aval de chaque valve de contrôle Vg, Vd. Ces sélecteurs Se sont commandés pour relier sélectivement les conduites de série 3g, 3d à la conduite haute pression 1 « marche arrière » ou à la conduite haute pression 2 « marche avant ». Ils sont configurés pour permettre le déchargement des conduites de série 3g, 3d, dans la conduite haute pression (« marche arrière » 1 ou « marche avant » 2) qui n'est pas sous pression.

En pratique, chaque sélecteur Se comporte une première voie S' reliée à la deuxième voie R de la valve de contrôle Vg, Vd à laquelle il est associé, une deuxième voie R' reliée à la conduite haute pression 1 « marche arrière » et une troisième voie A' reliée à la conduite haute pression 2 « marche avant ». Il comporte une première position I dans laquelle il relie la première et la deuxième voie (S'-R'), et une seconde position II dans laquelle il relie la première et la troisième voie (S'-A'). Le sélecteur Se est préférentiellement un distributeur 3/2 (3 voies et 2 positions).

D'une manière bien connue de l'homme du métier, un organe mobile, du type tiroir, permet de passer d'une position à l'autre. Cet organe mobile est commandé par des organes de commande C3, C4 opposés. Ces demiers se présentent avantageusement sous la forme de chambre hydraulique de commande, permettant de contrôler les sélecteurs Se. Un premier organe de commande C3 (associé à la première position I du sélecteur Se) est relié à la conduite haute pression 2 « marche avant ». Un second organe de commande C4 (associé à la seconde position II du sélecteur Se) est relié à la conduite haute pression 1 « marche arrière ». Chaque sélecteur Se est donc commandé en fonction de la différence de pression entre la conduite haute pression 2 « marche avant » et la conduite haute pression 1 « marche arrière ». En pratique, les sections des chambres des organes de commande C3, C4 sont égales. Lorsque la pression régnant dans la conduite haute pression 1 « marche arrière » est inférieure à la pression régnant dans la conduite haute pression 2 « marche avant », alors le sélecteur Se se place dans la première position I. Et lorsque la pression régnant dans la conduite haute pression 1 « marche arrière » est supérieure à la pression régnant dans la conduite haute pression 2 « marche avant », alors le sélecteur Se se place dans la seconde position II.

D'autres types d'organes de sélection de la pression peuvent être utilisés par l'homme du métier.

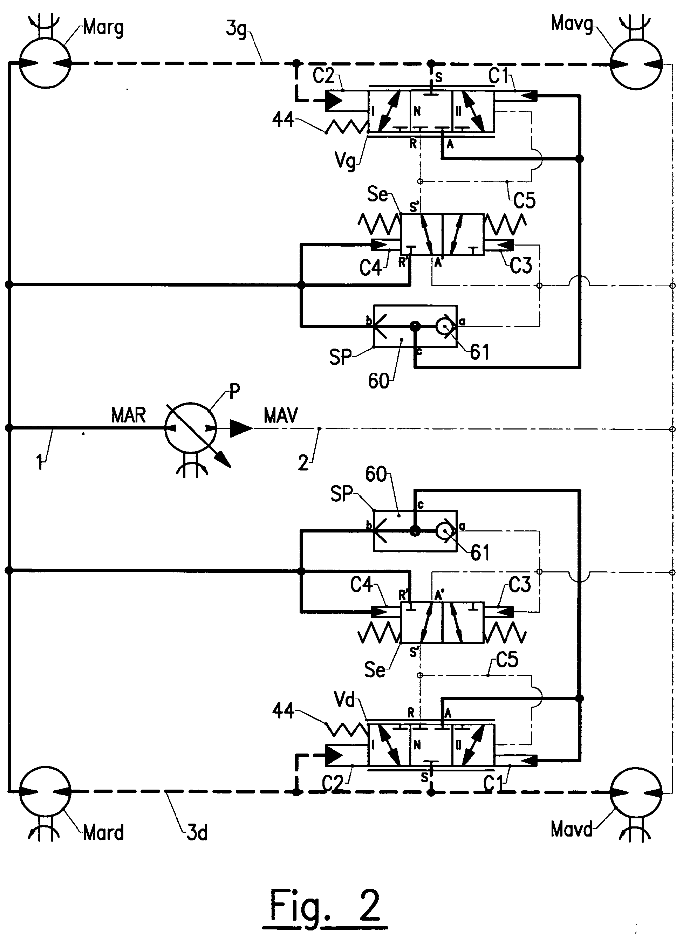

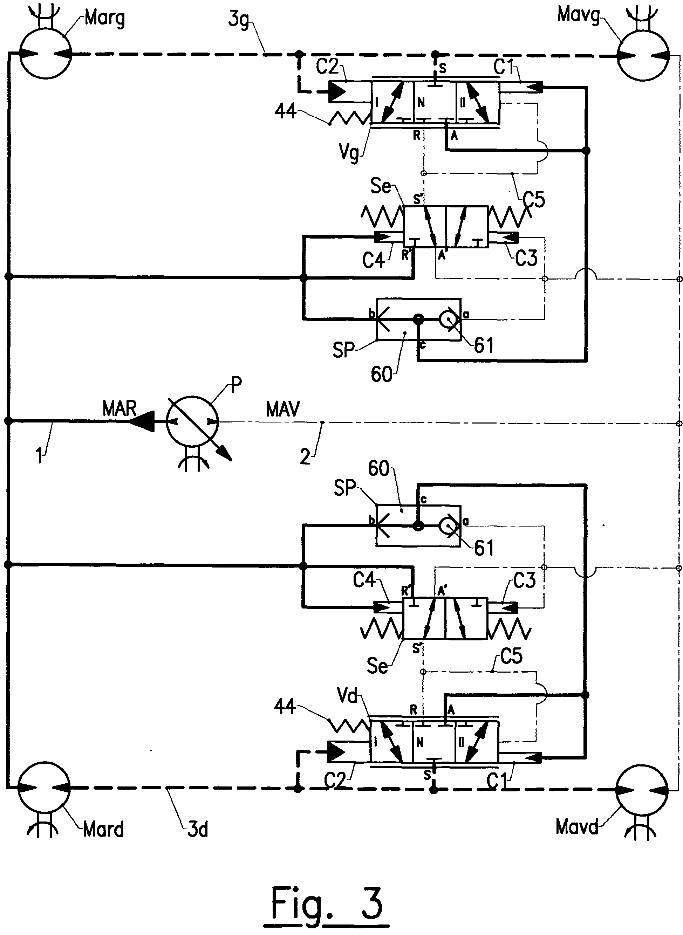

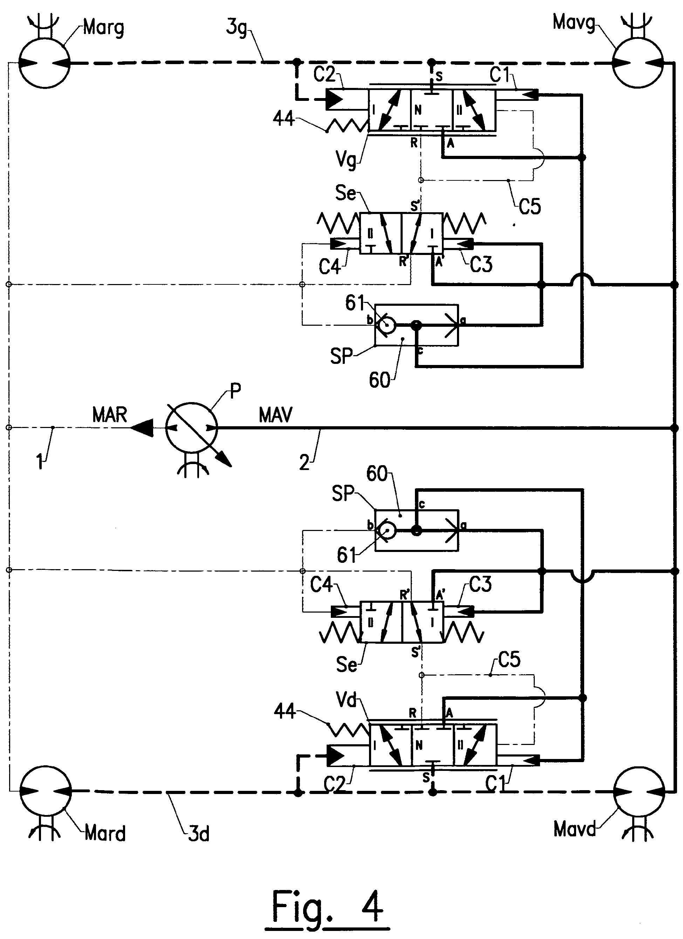

Chaque valve de contrôles Vg, Vd est également associée à un sélecteur de pression SP. Ces derniers permettent de commander les valves de contrôle Vg, Vd en fonction de la pression dans la conduite haute pression « marche arrière » 1 ou « marche avant » 2, qui a la pression la plus élevée. Dans l'exemple des figures 1 à 4, chaque sélecteur de pression SP comporte une première voie « a » reliée à la conduite haute pression 2 « marche avant », une seconde voie « b » reliée à la conduite haute pression 1 « marche arrière », ladite première voie et ladite seconde voie étant opposées. Une troisième voie « c » est reliée : au premier organe de commande C1 de la valve de contrôle Vg, Vd à laquelle le sélecteur de pression SP est associé et à la troisième voie A de la valve de contrôle Vg, Vd associée. Ce dernier comporte également une chambre interne 60 dans laquelle débouche chacune desdites voies « a », « b » et « c ». Une bille 61 est apte à se déplacer dans la chambre 60, sous l'effet de la pression, pour obturer la première voie « a » ou la seconde voie « b ». Par exemple, si la pression dans la conduite haute pression 2 « marche avant » est supérieure à la pression dans la conduite haute pression 1 « marche arrière », alors la bille 61 obturera la seconde voie « b » (figures 1 et 3), et le premier organe de commande C1 et la troisième voie A seront connectés à ladite conduite haute pression 2 « marche avant ». Et si la pression dans la conduite haute pression 2 « marche avant » est inférieure à la pression dans la conduite haute pression 1 « marche arrière », alors la bille 61 obturera la première voie « a » (figures 2 et 4), et le premier organe de commande C1 et la troisième voie A seront connectés à ladite conduite haute pression 1 « marche arrière ». D'autres types d'organes permettant de commander les valves de contrôle de la pression Vg, Vd en fonction de la pression dans la conduite haute pression « marche arrière » 1 ou « marche avant » 2, qui a la pression la plus élevée, peuvent bien évidemment être utilisés par l'homme du métier.

Le fonctionnement du dispositif de transmission hydrostatique DTH, selon le premier mode de réalisation, et en fonction du mode de roulage, va maintenant être décrit en détail en référence aux figures 1 à 4. Sur ces figures, les traits continus de forte épaisseur représentent les conduites dans lesquelles le fluide circule à haute pression. Les traits discontinus de forte épaisseur représentent les conduites dans lesquelles le fluide circule à une pression intermédiaire à réguler. Les traits discontinus de faible épaisseur représentent les conduites dans lesquelles le fluide circule sans être mis sous pression. L'ensemble de ces conduites permet de former un circuit fermé de transmission hydrostatique. La flèche au niveau de la pompe P indique le sens du débit.

La figure 1 illustre le dispositif DTH dans le cas où le véhicule circule en « marche avant », sur plat ou en légère montée (ou en légère accélération). Dans ces conditions de roulage, l'arrière du véhicule étant généralement plus chargé que l'avant, il est avantageux de développer davantage de couple sur les roues arrière que sur les roues avant.

La pompe P fait circuler, sous pression, le fluide dans la conduite haute pression 2 « marche avant ». Cette pression de travail représente la sollicitation du système : elle correspond au couple nécessaire à l'entrainement du véhicule à ce moment précis. La conduite haute pression 1 « marche arrière » n'est pas mise sous pression. Dans ces conditions et par l'intermédiaire des sélecteur de pression SP, les sélecteurs Se se placent dans la première position I et le premier organe de commande C1 des valves de contrôle Vg, Vd est connecté à la conduite haute pression 2 « marche avant ». La troisième voie A desdites valves est également connectée à la conduite haute pression 2 « marche avant ».

Les valves de contrôle Vg, Vd sont commandées sur la base d'une fraction de la pression de travail, cette dernière étant la pression dans la conduite haute pression 2 « marche avant ». Comme explicité précédemment, la fraction de commande est par exemple de 80%.

Si la pression dans les conduites de série 3g, 3d est égale à 80% de la pression de travail, alors, les valves de contrôle Vg, Vd se positionnent dans la position neutre N. La différence de pression entre les orifices des moteurs « arrière » Marg, Mard est égale à 80% de la différence de pression maximale. Le couple développé par ces deux moteurs « arrière » correspond à 80 % du couple maximal. Et la différence de pression entre les orifices des deux moteurs « avant » Mavg, Mavd est égale à 20% de la différence de pression maximale. Le couple développé par ces deux moteurs « avant » correspond à 20 % du couple maximal. Quelle que soit la pression de travail, cette répartition des couples reste constante entre les roues avant et les roues arrière.

Si la pression dans les conduites de série 3g, 3d est inférieure à 80% de la pression de travail, alors, les valves de contrôle Vg, Vd se positionnent dans la seconde position II de sorte que le fluide sous pression en provenance de la conduite haute pression 2 « marche avant » puisse être injecté dans lesdites conduites de série.

Si la pression dans les conduites de série 3g, 3d est supérieure à 80% de la pression de travail, alors, les valves de contrôle Vg, Vd se positionnent dans la première position I de sorte que le fluide sous pression dans lesdites conduites séries 3g, 3d puisse se décharger dans la conduite haute pression 1 « marche arrière ». Ce déchargement est possible du fait que les sélecteurs Se restent dans la première position I où les valves de contrôle Vg, Vd sont connectées à la conduite haute pression 1 « marche arrière ».

La figure 2 illustre le dispositif DTH dans le cas où le véhicule circule en « marche avant », en légère descente (ou légère décélération).

La pompe P débite le fluide dans la conduite haute pression 2 « marche avant ». Toutefois, du fait de la pente, la pression de travail est reportée dans la conduite haute pression 1 « marche arrière ». Dans ces conditions, le sélecteur Se se place dans la seconde position II et le premier organe de commande C1 des valves de contrôle Vg, Vd est connecté à la conduite haute pression 1 « marche arrière ». La troisième voie A desdites valves est également connectée à la conduite haute pression 1 « marche arrière ».

Les valves de contrôle Vg, Vd sont commandées sur la base d'une fraction de la pression de travail, qui est la pression dans la conduite haute pression 1 « marche arrière ».

Si la pression dans les conduites de série 3g, 3d est égale à 80% de la pression de travail, alors, les valves de contrôle Vg, Vd se positionnent dans la position neutre N. Le couple développé par les moteurs « arrière » Marg, Mard correspond à 80 % du couple maximal et celui développé par les deux moteurs « avant » Mavg, Mavd correspond à 20 % dudit couple maximal.

Si la pression dans les conduites de série 3g, 3d est inférieure à 80% de la pression de travail, alors, les valves de contrôle Vg, Vd se positionnent dans la seconde position II de sorte que le fluide sous pression en provenance de la conduite haute pression 1 « marche arrière » puisse être injecté dans lesdites conduites de série.

Si la pression dans les conduites de série 3g, 3d est supérieure à 80% de la pression de travail, alors, les valves de contrôle Vg, Vd se positionnent dans la première position I de sorte que le fluide sous pression dans lesdites conduites séries 3g, 3d puisse se décharger dans la conduite haute pression 2 « marche avant ». Ce déchargement est possible du fait que les sélecteurs Se restent dans la seconde position II où les valves de contrôle Vg, Vd sont connectées à la conduite haute pression 2 « marche avant ».

La figure 3 illustre le dispositif DTH dans le cas où le véhicule circule en « marche arrière », en légère montée (ou légère accélération). Le fonctionnement est identique à celui décrit en référence à la figure 3, sauf en ce que la pompe P débite le fluide dans la conduite haute pression 1 « marche arrière ».

La figure 4 illustre le dispositif DTH dans le cas où le véhicule circule en « marche arrière », en légère descente (ou légère décélération). Le fonctionnement est identique à celui décrit en référence à la figure 1, sauf en ce que la pompe P débite le fluide dans la conduite haute pression 1 « marche arrière ».

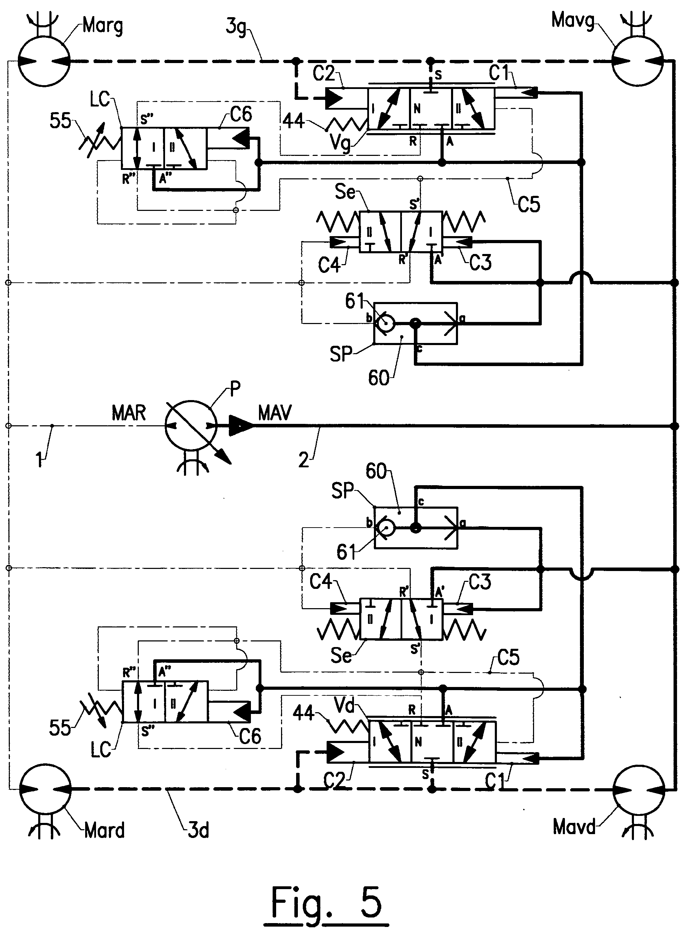

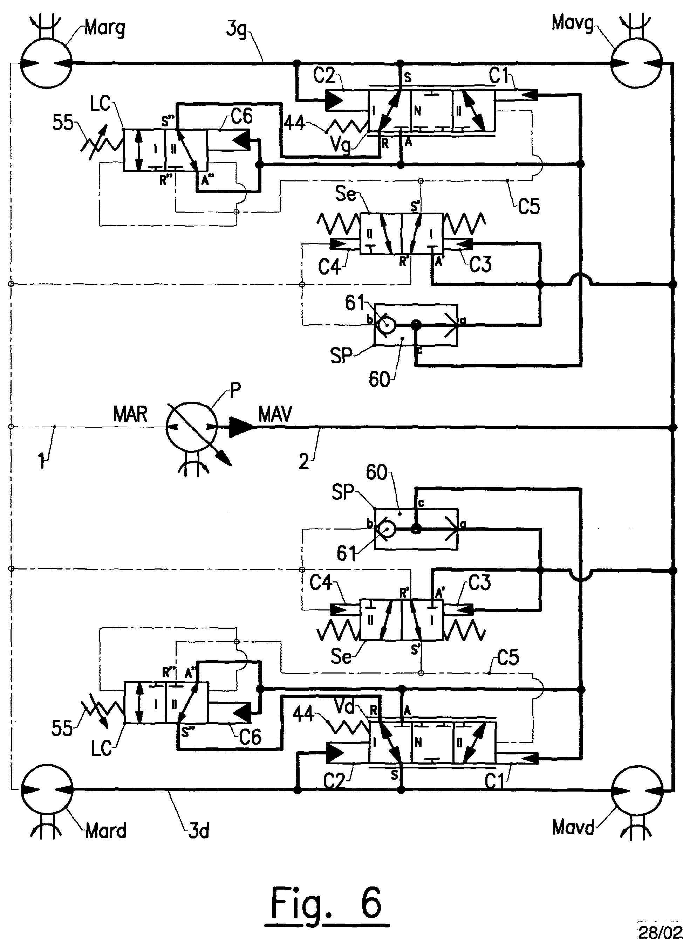

Une variante de réalisation est schématisée sur les figures 5 et 6. Dans cette variante, le circuit hydraulique est similaire à celui décrit précédemment en référence aux figures 1 à 4, sauf en ce qu'un limiteur de couple LC est disposé entre chaque valve de contrôle Vg, Vd, et son sélecteur Se associé.

Chaque limiteur LC comporte : une première voie S" reliée à la deuxième voie R de la valve de contrôle Vg, Vd à laquelle il est associé, une deuxième voie R" reliée à la première voie S' du sélecteur Se auquel il est associé et une troisième voie A" reliée au sélecteur de pression SP correspondant et plus particulièrement à sa troisième voie « c ». Les voies S' d'un sélecteur Se et R d'une valve de contrôle Vg, Vd sont donc maintenant reliées via un limiteur LC. Ce dernier comporte une première position I dans laquelle il relit la première et la deuxième voie (S"-R"), et une seconde position II dans laquelle il relit la première et la troisième voie (S"-A"). Le limiteur LC est donc préférentiellement un distributeur 3/2 (3 voies et 2 positions).

Au repos, ou à l'équilibre, un ressort de rappel taré 55 (par exemple à 400 bar) permet de maintenir le limiteur LC dans la première position I, c'est-à-dire dans une position où les valves de contrôle Vg, Vd sont susceptibles d'être reliées au sélecteur Se associé. Un organe mobile, du type tiroir, permet de passer d'une position à l'autre, en étant commandé par un organe de commande C6, ce dernier se présentant avantageusement sous la forme d'une chambre hydraulique de commande disposé à l'extrémité opposée du ressort taré 55. L'organe de commande C6 est relié au sélecteur de pression SP correspondant et plus particulièrement à la troisième voie « c » dudit sélecteur. Tant que la pression de commande (qui est la pression de la conduite haute pression 2 « marche avant » ou la pression de la conduite haute pression 1 « marche arrière ») n'excède pas la pression limite de tarage du ressort 55 (ou pression d'activation), le limiteur LC se place dans la première position I où les première et seconde voies (S"-R") sont reliées. Lorsque la pression de commande atteint la pression d'activation, le limiteur LC se place dans la seconde position II où les voies S" et A" sont reliées.

Le fonctionnement du dispositif de transmission hydrostatique DTH, selon cette première variante de réalisation, et en fonction du mode de roulage, va maintenant être décrit en détail en référence aux figures 5 et 6.

La figure 5 illustre le dispositif DTH dans le cas où le véhicule circule en « marche avant », sur plat ou en légère montée (ou en légère accélération).

La pompe P fait circuler, sous pression, le fluide dans la conduite haute pression 2 « marche avant ». La conduite haute pression 1 « marche arrière » n'est pas mise sous pression. Dans ces conditions et par l'intermédiaire des sélecteur de pression SP :
- les sélecteurs Se se placent dans la première position I,
- le premier organe de commande C1 des valves de contrôle Vg, Vd est connecté à la conduite haute pression 2 « marche avant »,
- la troisième voie A des valves de contrôle Vg, Vd est connectée à la conduite haute pression 2 « marche avant »,
- l'organe de commande C6 des limiteurs LC est connecté à la conduite haute pression 2 « marche avant »,
- la troisième voie A" des limiteurs LC est également connectée à la conduite haute pression 2 « marche avant ».

Les valves de contrôle Vg, Vd sont commandées sur la base d'une fraction de la pression de travail, cette dernière étant la pression dans la conduite haute pression 2 « marche avant ». Du fait que la demande de couple n'est pas excessive, la pression dans la conduite haute pression 2 « marche avant » n'atteint pas la pression d'activation du limiteur LC. Ce dernier reste donc dans la première position I dans laquelle il relie ses première et deuxième voies (S"-R"). Le fonctionnement est identique à celui décrit précédemment en référence à la figure 1.

La figure 6 illustre le dispositif DTH fonctionnant en mode « travail », et dans le cas où le véhicule circule en « marche avant », en forte montée (ou forte accélération).

La pompe P fait circuler, sous pression, le fluide dans la conduite haute pression 2 « marche avant ». Cette pression de travail correspond au couple nécessaire à l'entrainement du véhicule à ce moment précis. La conduite haute pression 1 « marche arrière » n'est pas mise sous pression.

Dans ces conditions de roulage, l'arrière du véhicule étant généralement plus chargé que l'avant, les roues avant risquent de patiner. La conception des valves de contrôle Vg, Vd implique que la pression dans les conduites de séries 3g, 3d dépend de la fraction de commande desdites valves. Malgré cela, il est avantageux de pouvoir décharger les moteurs « avant » pour éviter le patinage des roues avant, tout en obtenant un couple maximal sur les moteurs « arrière », de façon à donner un maximum d'adhérence aux roues arrières.

La demande de couple étant importante, la pression dans la conduite haute pression 2 « marche avant » atteint la pression d'activation du limiteur LC. Ce dernier passe alors dans la seconde position II dans laquelle les valves de contrôle Vg, Vd sont reliées à la conduite haute pression 2 « marche avant ». Dans cette configuration, les conduites de série 3g, 3d, ne peuvent plus se décharger dans la conduite haute pression 1 « marche arrière » et les valves de contrôle Vg, Vd restent bloquées dans la première position I. La pression dans les conduites de série 3g, 3d, se maintient donc à la pression de travail.

La différence de pression entre les orifices des moteurs « arrière » Marg, Mard, est maximale, ces deux moteurs développant donc un couple maximal sur les roues arrière. Et la différence de pression entre les orifices des deux moteurs « avant » Mavg, Mavd étant nulle, lesdits moteurs sont déchargés, évitant tout risque de patinage des roues avant.

Le fonctionnement est identique dans le cas où le véhicule circule en « marche arrière », en forte descente (ou forte décélération).

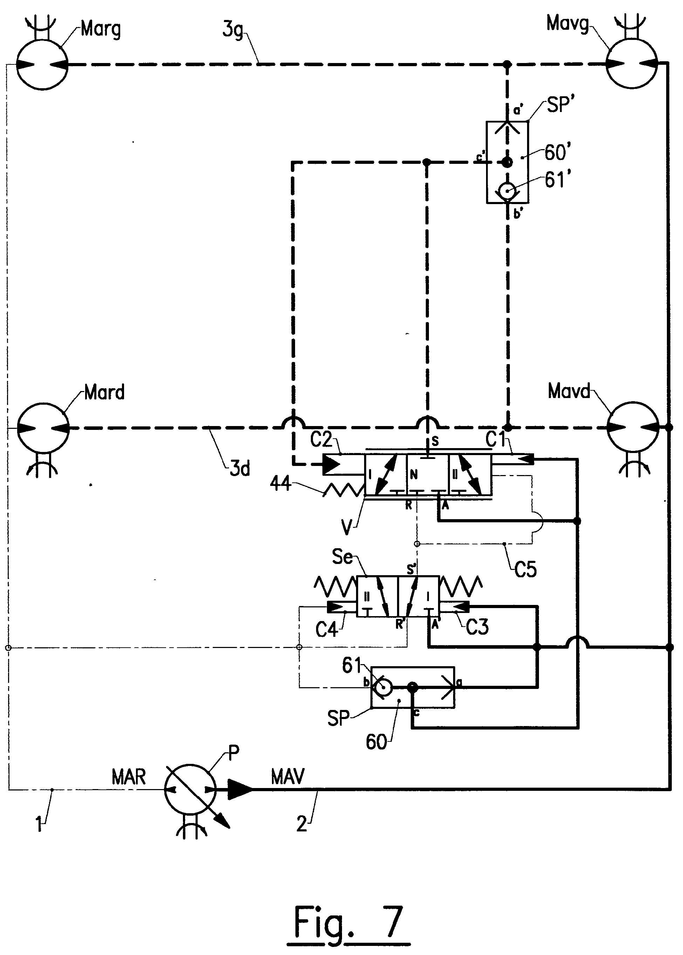

Une autre variante de réalisation de l'invention est schématisée sur la figure 7. Dans ce mode de réalisation, le dispositif de transmission hydrostatique DTH est similaire à celui décrit précédemment en référence aux figures 1 à 4, sauf en ce que les deux conduites de série 3g, 3d, sont connectées à une unique valve de contrôle de la pression V. La valve V a une conception et un fonctionnement similaire à ceux des valves de contrôle Vg, Vd décrites précédemment. La première voie S est reliée à un sélecteur de pression SP' secondaire, lui même connecté aux deux conduites de série 3g, 3d ; la deuxième voie R est reliée à un sélecteur Se ; et la troisième voie A est reliée à un sélecteur de pression SP primaire. Le sélecteur Se et le sélecteur de pression SP primaire sont similaires à ceux décrits précédemment en référence aux figures 1 à 4. En particulier, le sélecteur de pression SP primaire permet de commander la valve V en fonction de la pression dans la conduite haute pression « marche arrière » 1 ou « marche avant » 2, qui a la pression la plus élevée. Le premier organe de commande C1 est relié au sélecteur de pression SP primaire. Le second organe de commande C2 est relié au sélecteur de pression SP' secondaire. Les éléments communs aux deux modes de réalisation portent les mêmes références.

Le sélecteur de pression SP' secondaire permet de commander la valve de contrôle V en fonction de la pression dans la conduite de série 3g ou 3d, qui a la pression la plus élevée. Dans l'exemple de la figure 7, il comporte une première voie « a' » reliée à la conduite de série gauche 3g, une seconde voie « b' » reliée à la conduite de série droite 3d, ladite première voie et ladite seconde voie étant opposées ; une troisième voie « c' » reliée au second organe de commande C2 et à la première voie S de la valve de contrôle V. Le sélecteur de pression SP' secondaire comporte également une chambre interne 60' dans laquelle débouche chacune desdites voies « a' », « b' » et « c' ». Une bille 61' est apte à se déplacer dans la chambre 60', sous l'effet de la pression, pour obturer la première voie « a' » ou la seconde voie « b' ». Par exemple, si la pression dans la conduite série de gauche 3g est supérieure à la pression dans la conduite série de droite 3d, alors la bille 61' obturera la seconde voie « b' », et le second organe de commande C2 et la première voie S de la valve de contrôle V seront connectés à ladite conduite série de gauche 3g. Et inversement. D'autres types d'organes permettant de commander la valve de contrôle V en fonction de la pression dans la conduite de série 3g, 3d, qui a la pression la plus élevée, peuvent bien évidemment être utilisés par l'homme du métier.

Un limiteur de couple LC similaire à celui décrit précédemment en référence aux figures 5 et 6 peut être interposé entre la valve de contrôle V et le sélecteur Se. La connexion de ce limiteur LC est identique à celle schématisée sur les figures 5 et 6.

## Revendications

1. Dispositif de transmission hydrostatique d'un engin mobile comprenant :
- une pompe (P) dont les orifices principaux sont reliés à une conduite haute pression (1) « marche arrière », et une conduite haute pression (2) « marche avant »,
- un premier (Marg) et un second (Mard) moteurs « arrière » aptes à être reliés à la conduite haute pression (1) « marche arrière », et un premier (Mavg) et un second (Mavd) moteurs « avant » aptes à être reliés à la conduite haute pression (1) « marche arrière » ou à la conduite haute pression (2) « marche avant », chaque dit moteur « arrière » étant relié à un dit moteur « avant » par une conduite de série (3g, 3d), constituant ainsi un circuit fermé de transmission,
- au moins une valve de contrôle de la pression (V, Vg, Vd) connectée aux conduites de série (3g, 3d),
**se caractérisant par le fait que** la valve de contrôle de la pression (V, Vg, Vd) est reliée à un sélecteur (Se) commandé en fonction de la différence de pression entre la conduite haute pression (2) « marche avant » et la conduite haute pression (1) « marche arrière », pour relier sélectivement les conduites de série (3g, 3d) à ladite conduite haute pression (1) « marche arrière » ou à ladite conduite haute pression (2) « marche avant ».

2. Dispositif selon la revendication 1, dans lequel le sélecteur (Se) est configuré pour autoriser le déchargement des conduites de série (3g, 3d) dans la conduite haute pression (1) « marche arrière », lorsque ladite conduite haute pression n'est pas sous pression.

3. Dispositif selon l'une des revendications 1 ou 2, dans lequel le sélecteur (Se) est configuré pour autoriser le déchargement des conduites de série (3g, 3d) dans la conduite haute pression (2) « marche avant », lorsque ladite conduite haute pression n'est pas sous pression.

4. Dispositif selon l'une des revendications précédentes, dans lequel le sélecteur (Se) comporte une première position (I) permettant de relier les conduites de série (3g, 3d) à la conduite haute pression (1) « marche arrière » et une seconde position (II) permettant de relier lesdites conduites de série à la conduite haute pression (2) « marche avant ».

5. Dispositif selon la revendication 4, dans lequel le sélecteur (Se) est configuré pour se placer dans la première position (I) lorsque la pression régnant dans la conduite haute pression (1) «marche arrière » est inférieure à la pression régnant dans la conduite haute pression (2) « marche avant ».

6. Dispositif selon l'une des revendications 4 ou 5, dans lequel le sélecteur (Se) est configuré pour se placer dans la seconde position (II) lorsque la pression régnant dans la conduite haute pression (1) « marche arrière » est supérieure à la pression régnant dans la conduite haute pression (2) « marche avant ».

7. Dispositif selon l'une des revendications précédentes, dans lequel un limiteur de couple (LC) est disposé entre la valve de contrôle de la pression (V, Vg, Vd) et le sélecteur (Se).

8. Dispositif selon l'une des revendications précédentes, dans lequel chaque conduite de série (3g, 3d) est connectée à sa propre valve de contrôle de la pression (Vg, Vd), chaque dite valve étant connectée à son propre sélecteur (Se).

9. Dispositif selon la revendication 8, dans lequel chaque valve de contrôle de la pression (Vg, Vd) est commandée en fonction de la pression dans la conduite de série (3g, 3d) à laquelle elle est connectée.

10. Dispositif selon l'une des revendications 8 ou 9, dans lequel chaque valve de contrôle de la pression (Vg, Vd) est reliée à un organe (SP) permettant de la commander en fonction de la pression dans la conduite haute pression « marche arrière » (1) ou « marche avant » (2), qui a la pression la plus élevée.

11. Dispositif selon l'une des revendications 1 à 8, dans lequel les deux conduites de série (3g, 3d) sont connectées à une unique valve de contrôle de la pression (V).

12. Dispositif selon la revendication 11, dans lequel l'unique valve de contrôle de la pression (V) est reliée à un organe (SP') permettant de la commander en fonction de la pression dans la conduite de série (3g, 3d) qui a la pression la plus élevée.

13. Dispositif selon l'une des revendications 11 ou 12, dans lequel l'unique valve de contrôle de la pression (V) est reliée à un organe (SP) permettant de la commander en fonction de la pression dans la conduite haute pression « marche arrière » (1) ou « marche avant » (2), qui a la pression la plus élevée.

14. Procédé pour contrôler une pression hydrostatique dans un engin mobile, ledit procédé consistant à :
- mettre un fluide sous pression dans une conduite haute pression (1) « marche arrière », et une conduite haute pression (2) « marche avant »,
- faire circuler le fluide vers un premier (Marg) et un second (Mard) moteurs « arrière » aptes à être reliés à la conduite haute pression (1) « marche arrière », et vers un premier (Mavg) et un second (Mavd) moteurs « avant » aptes à être reliés à la conduite haute pression (2) « marche avant » ou à la conduite haute pression (1) « marche arrière », chaque dit moteur « arrière » étant apte à être relié à un dit moteur « avant » par une conduite de série (3g, 3d), de façon à ce que ledit fluide circule dans un circuit fermé de transmission,
- contrôler la pression dans les conduites de série (3g, 3d) en permettant auxdites conduites de se connecter sélectivement : soit à la conduite haute pression (1) « marche arrière », soit à la conduite haute pression (2) « marche avant », en fonction de la différence de pression entre ladite conduite haute pression « marche avant » et ladite conduite haute pression « marche arrière ».

15. Procédé selon la revendication 14, dans lequel les conduites de série (3g, 3d) se déchargent dans la conduite haute pression (1) « marche arrière » lorsque ladite conduite haute pression (1) n'est pas sous pression et se déchargent dans la conduite haute pression (2) « marche avant » lorsque ladite conduite haute pression (2) n'est pas sous pression.

## Patentansprüche

1. Hydrostatische Übertragungsvorrichtung einer beweglichen Maschine, umfassend:
- eine Pumpe (P), deren Hauptöffnungen mit einer Hochdruckleitung (1) "Rückwärtsgang" und einer Hochdruckleitung (2) "Vorwärtsgang" verbunden sind,
- einen ersten (Marg) und einen zweiten (Mard) "hinteren" Motor, die geeignet sind, mit der Hochdruckleitung (1) "Rückwärtsgang" verbunden zu werden, und einen ersten (Mavg) und einen zweiten (Mavd) "vorderen" Motor, die geeignet sind, mit der Hochdruckleitung (1) "Rückwärtsgang" oder der Hochdruckleitung (2) "Vorwärtsgang" verbunden zu werden, wobei jeder "hintere" Motor mit einem "vorderen" Motor durch eine Serienleitung (3g, 3d) verbunden ist, wodurch ein geschlossener Übertragungskreis gebildet ist,
- mindestens ein Druckkontrollventil (V, Vg, Vd), das an die Serienleitungen (3g, 3d) angeschlossen ist,
**dadurch gekennzeichnet, dass** das Druckkontrollventil (V, Vg, Vd) mit einem Wahlschalter (Se) verbunden ist, der in Abhängigkeit von dem Druckunterschied zwischen der Hochdruckleitung (2) "Vorwärtsgang" und der Hochdruckleitung (1) "Rückwärtsgang" gesteuert wird, um selektiv die Serienleitungen (3g, 3d) mit der Hochdruckleitung (1) "Rückwärtsgang" oder mit der Hochdruckleitung (2) "Vorwärtsgang" zu verbinden.

2. Vorrichtung nach Anspruch 1, bei der der Wahlschalter (Se) derart ausgeführt ist, dass er das Entladen der Serienleitungen (3g, 3d) in die Hochdruckleitung (1) "Rückwärtsgang" gestattet, wenn die Hochdruckleitung nicht unter Druck ist.

3. Vorrichtung nach einem der Ansprüche 1 oder 2, bei der der Wahlschalter (Se) derart ausgeführt ist, dass er das Entladen der Serienleitungen (3g, 3d) in die Hochdruckleitung (2) "Vorwärtsgang" gestattet, wenn die Hochdruckleitung nicht unter Druck ist.

4. Vorrichtung nach einem der vorhergehenden Ansprüche, bei der der Wahlschalter (Se) eine erste Position (I), die es ermöglicht, die Serienleitungen (3g, 3d) mit der Hochdruckleitung (1) "Rückwärtsgang" zu verbinden, und eine zweite Position (II) umfasst, die es ermöglicht, die Serienleitungen mit der Hochdruckleitung (2) "Vorwärtsgang" zu verbinden.

5. Vorrichtung nach Anspruch 4, bei der der Wahlschalter (Se) derart ausgeführt ist, dass er sich in die erste Position (I) begibt, wenn der in der Hochdruckleitung (1) "Rückwärtsgang" herrschende Druck niedriger als der in der Hochdruckleitung (2) "Vorwärtsgang" herrschende Druck ist.

6. Vorrichtung nach Anspruch 4 oder 5, bei der der Wahlschalter (Se) derart ausgeführt ist, dass er sich in die zweite Position (II) begibt, wenn der in der Hochdruckleitung (1) "Rückwärtsgang" herrschende Druck höher als der in der Hochdruckleitung (2) "Vorwärtsgang" herrschende Druck ist.

7. Vorrichtung nach einem der vorhergehenden Ansprüche, bei der ein Drehmomentbegrenzer (LC) zwischen dem Druckkontrollventil (V, Vg, Vd) und dem Wahlschalter (Se) angeordnet ist.

8. Vorrichtung nach einem der vorhergehenden Ansprüche, bei der jede Serienleitung (3g, 3d) an ihr eigenes Druckkontrollventil (Vg, Vd) angeschlossen ist, wobei jedes Ventil an seinen eigenen Wahlschalter (Se) angeschlossen ist.

9. Vorrichtung nach Anspruch 8, bei der jedes Druckkontrollventil (Vg, Vd) in Abhängigkeit von dem Druck in der Serienleitung (3g, 3d), an die es angeschlossen ist, gesteuert wird.

10. Vorrichtung nach einem der Ansprüche 8 oder 9, bei der jedes Druckkontrollventil (Vg, Vd) mit einem Element (SP) verbunden ist, das es ermöglicht, es in Abhängigkeit von dem Druck in der Hochdruckleitung "Rückwärtsgang" (1) oder "Vorwärtsgang" (2), die den höchsten Druck hat, zu steuern.

11. Vorrichtung nach einem der Ansprüche 1 bis 8, bei der die beiden Serienleitungen (3g, 3d) an ein einziges Druckkontrollventil (V) angeschlossen sind.

12. Vorrichtung nach Anspruch 11, bei der das einzige Druckkontrollventil (V) mit einem Element (SP') verbunden ist, das es ermöglicht, es in Abhängigkeit von dem Druck in der Serienleitung (3g, 3d), die den höchsten Druck hat, zu steuern.

13. Vorrichtung nach einem der Ansprüche 11 oder 12, bei der das einzige Druckkontrollventil (V) an ein Element (SP) angeschlossen ist, das es ermöglicht, es in Abhängigkeit von dem Druck in der Hochdruckleitung "Rückwärtsgang" (1) oder "Vorwärtsgang" (2), die den höchsten Druck hat, zu steuern.

14. Verfahren, um einen hydrostatischen Druck in einer beweglichen Maschine zu kontrollieren, wobei das Verfahren darin besteht:
- ein Fluid in einer Hochdruckleitung (1) "Rückwärtsgang" und einer Hochdruckleitung (2) "Vorwärtsgang" unter Druck zu setzen,
- das Fluid zu einem ersten (Marg) und einem zweiten (Mard) "hinteren" Motor, die geeignet sind, an die Hochdruckleitung (1) "Rückwärtsgang" angeschlossen zu werden, und zu einem ersten (Mavg) und einem zweiten (Mavd) "vorderen" Motor, die geeignet sind, an die Hochdruckleitung (2) "Vorwärtsgang" oder an die Hochdruckleitung (1) "Rückwärtsgang" angeschlossen zu werden, zirkulieren zu lassen, wobei der "hintere" Motor geeignet ist, mit einem "vorderen" Motor durch eine Serienleitung (3g, 3d) verbunden zu werden, so dass das Fluid in einem geschlossenen Übertragungskreis zirkuliert,
- den Druck in den Serienleitungen (3g, 3d) zu kontrollieren, wobei es den Leitungen möglich ist, sich selektiv anzuschließen: entweder an die Hochdruckleitung (1) "Rückwärtsgang" oder an die Hochdruckleitung (2) "Vorwärtsgang", in Abhängigkeit von dem Druckunterschied zwischen der Hochdruckleitung "Vorwärtsgang" und der Hochdruckleitung "Rückwärtsgang".

15. Verfahren nach Anspruch 14, bei dem sich die Serienleitungen (3g, 3d) in die Hochdruckleitung (1) "Rückwärtsgang" entladen, wenn die Hochdruckleitung (1) nicht unter Druck ist, und sich in die Hochdruckleitung (2) "Vorwärtsgang" entladen, wenn die Hochdruckleitung (2) nicht unter Druck ist.

## Claims

1. Hydrostatic transmission device for a mobile vehicle comprising:
- a pump (P) the main orifices of which are connected to a "reverse travel" high-pressure pipe (1) and a "forward travel" high-pressure pipe (2),
- a first (Marg) and a second (Mard) "reverse" motor able to be connected to the "reverse travel" high-pressure pipe (1), and a first (Mavg) and a second (Mavd) "forward" motor able to be connected to the "reverse travel" high-pressure pipe (1) or to the "forward travel" high-pressure pipe (2), each said "reverse" motor being connected to one said "forward" motor by a series pipe (3g, 3d) thus constituting a closed transmission circuit,
- at least one pressure-control valve (V, Vg, Vd) connected to the series pipes (3g, 3d),
**characterized in that** the pressure-control valve (V, Vg, Vd) is connected to a selector (Se) operated as a function of the difference in pressure between the "forward travel" high-pressure pipe (2) and the "reverse travel" high-pressure pipe (1) so as selectively to connect the series pipes (3g, 3d) to said "reverse travel" high-pressure pipe (1) or to said "forward travel" high-pressure pipe (2).

2. Device according to Claim 1, in which the selector (Se) is configured to allow the series pipes (3g, 3d) to discharge into the "reverse travel" high-pressure pipe (1) when the said high-pressure pipe is not under pressure.

3. Device according to one of Claims 1 and 2, in which the selector (Se) is configured to allow the series pipes (3g, 3d) to discharge into the "forward travel" high-pressure pipe (2) when the said high-pressure pipe is not under pressure.

4. Device according to one of the preceding claims, in which the selector (Se) comprises a first position (I) allowing the series pipes (3g, 3d) to be connected to the "reverse travel" high-pressure pipe (1) and a second position (II) allowing the said series pipes to be connected to the "forward travel" high-pressure pipe (2).

5. Device according to Claim 4, in which the selector (Se) is configured to position itself in the first position (I) when the pressure obtaining in the "reverse travel" high-pressure pipe (1) is lower than the pressure obtaining in the "forward travel" high-pressure pipe (2).

6. Device according to one of Claims 4 and 5, in which the selector (Se) is configured to position itself in the second position (II) when the pressure obtaining in the "reverse travel" high-pressure pipe (1) is higher than the pressure obtaining in the "forward travel" high-pressure pipe (2).

7. Device according to one of the preceding claims, in which a torque limiter (LC) is positioned between the pressure-control valve (V, Vg, Vd) and the selector (Se).

8. Device according to one of the preceding claims, in which each series pipe (3g, 3d) is connected to its own pressure-control valve (Vg, Vd), each said valve being connected to its own selector (Se).

9. Device according to Claim 8, in which each pressure-control valve (Vg, Vd) is operated as a function of the pressure in the series pipe (3g, 3d) to which it is connected.

10. Device according to one of Claims 8 and 9, in which each pressure-control valve (Vg, Vd) is connected to a member (SP) allowing it to be operated as a function of the pressure in the "reverse travel" high-pressure pipe (1) or "forward travel" high-pressure pipe (2) that has the highest pressure.

11. Device according to one of Claims 1 to 8, in which the two series pipes (3g, 3d) are connected to a single pressure-control valve (V).

12. Device according to Claim 11, in which the single pressure-control valve (V) is connected to a member (SP') allowing it to be operated as a function of the pressure in the series pipe (3g, 3d) that has the highest pressure.

13. Device according to one of Claims 11 and 12, in which the single pressure-control valve (V) is connected to a member (SP) allowing it to be operated as a function of the pressure in the "reverse travel" high-pressure pipe (1) or "forward travel" high-pressure pipe (2) that has the highest pressure.

14. Method for controlling a hydrostatic pressure in a mobile vehicle, said method consisting in:
- pressurizing a fluid in a "reverse travel" high-pressure pipe (1) and a "forward travel" high-pressure pipe (2),
- circulating the fluid towards a first (Marg) and a second (Mard) "reverse" motor able to be connected to the "reverse travel" high-pressure pipe (1) and towards a first (Mavg) and a second (Mavd) "forward" motor able to be connected to the "forward travel" high-pressure pipe (2) or to the "reverse travel" high-pressure pipe (1), each said "reverse" motor being able to be connected to one said "forward" motor by a series pipe (3g, 3d) so that the said fluid circulates in a closed transmission circuit,
- controlling the pressure in the series pipes (3g, 3d) by allowing the said pipes to connect selectively: either to the "reverse travel" high-pressure pipe (1) or to the "forward travel" high-pressure pipe (2), as a function of the difference in pressure between the said "forward travel" high-pressure pipe and the said "reverse travel" high-pressure pipe.

15. Method according to Claim 14, in which the series pipes (3g, 3d) discharge into the "reverse travel" high-pressure pipe (1) when the said high-pressure pipe (1) is not under pressure and discharge into the "forward travel" high-pressure pipe (2) when the said high-pressure pipe (2) is not under pressure.
